(19) Europäisches Patentamt
European Patent Office
Office européen des brevets

(11) Veröffentlichungsnummer : **0 177 454**
**B1**

(12) **EUROPÄISCHE PATENTSCHRIFT**

(45) Veröffentlichungstag der Patentschrift : **21.12.88**

(21) Anmeldenummer : **85810449.0**

(22) Anmeldetag : **30.09.85**

(51) Int. Cl.⁴ : **C 07 F 7/12**, C 07 F 7/14, C 07 B 51/00

# (54) Silane, Verfahren zu deren Herstellung und deren Verwendung.

(30) Priorität : **04.10.84 CH 4765/84**

(43) Veröffentlichungstag der Anmeldung : **09.04.86 Patentblatt 86/15**

(45) Bekanntmachung des Hinweises auf die Patenterteilung : **21.12.88 Patentblatt 88/51**

(84) Benannte Vertragsstaaten : **CH DE FR GB IT LI NL**

(56) Entgegenhaltungen :
**JOURNAL OF ORGANOMETALLIC CHEMISTRY; Band 225, 1982, Seiten 177-191, Lausanne, CH; D. SEYFERTH et al.: "Hexamethylsilirane. II Ring-opening reactions with some simple reagents"**
**CHEMICAL ABSTRACTS, Band 86, Nr. 21, 23. Mai 1977, Seite ?, linke Spalte, Zusammenfassungsnr. 155738w, Columbus, Ohio, US; S.S. NOVIKOV "Synthesis of adamantyl-containing acyloxysilanes"**
**CHEMICAL ABSTRACTS, Band 89, Nr. 5, 31. Juli 1978, Seite 632, linke Spalte, Zusammenfassungsnr. 43577y, Columbus, Ohio, US; E.A. CHERNYSHEV et al.: "Synthesis of trichlorosilyladamantane and its derivatives"**
**JOURNAL OF ORGANOMETALLIC CHEMISTRY, Band 117, 1976, Seiten C51-C54, Lausanne, CH; D. SEYFERTH et al.: "Dimethylsilylene transfer from hexamethylsilirane to olefins"**
**Protective Groups in Organic Synthesis, T.W. Greene (Wiley), Seiten 43-50**
**Methoden der organischen Chemie, Band XIII/5(1980), Seiten 100, 101, 118**
**Tetrahedron Letters, Band 28, 1987, S. 4019-4022**
**Die Akte enthält technische Angaben, die nach dem Eingang der Anmeldung eingereicht wurden und die nicht in dieser Patentschrift enthalten sind.**

(73) Patentinhaber : **CIBA-GEIGY AG**
**Klybeckstrasse 141**
**CH-4002 Basel (CH)**

(72) Erfinder : **Oertle, Konrad, Dr.**
**Vogesenstrasse 10**
**CH-4106 Therwil (CH)**
Erfinder : **Wetter, Hansjürg, Dr.**
**Vogesenstrasse 22**
**CH-4106 Therwil (CH)**

**EP 0 177 454 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft Silane mit einem 1,1,2,2-tetrasubstituierten Ethylrest, ein Verfahren zu deren Herstellung durch Addition von Monochlormonohydrosilanen an tetrasubstituierte Ethylene und die Verwendung der Silane als Schutzgruppenreagenz.

Aus D. Seyferth et al., J. of Organom. Chem., 225, S. 177-191 (1982), ist es bekannt, dass (1,1,2,2-Tetramethylethyl) dimethylchlorsilan, -bromsilan, -essigsäureester, -chloressigsäureester oder -cycloproponcarbonsäureester durch Ringspaltung von Hexamethylsiliran mit Chlorwasserstoff, Brom oder einer entsprechenden Carbonsäure erhältlich sind. Die gleichen Autoren beschreiben im J. of Organom. Chem., Band 117, Seite 653 (1976) Ethylpentamethylsiliran und das Methanolyseprodukt (2,3-Dimethyl-pent-3-yl) dimethylsilyl-methylether. Es ist ferner bekannt, dass Monochlorsilane durch die Anlagerung von $R^aR^bSiHCl$ an ungesättigte Verbindungen hergestellt werden können (vgl. W. Noll, Chemie und Technologie der Silicone, Verlag Chemie, Weinheim, (1968), S. 45ff). Diese Reaktion wird durch Metallverbindungen, wie z. B. $H_2PtCl_6$, katalysiert, wobei oft hoher Druck und/oder hohe Temperaturen angewendet werden müssen. Unter diesen Bedingungen treten Umlagerungsreaktionen auf, besonders bei Verwendung stark verzweigter Alkene.

Gemäss der DE-A-28 04 204 wird daher vorgeschlagen, für diese Reaktion Aluminiumhalogenide von Chlor und Brom als Katalysatoren einzusetzen. Bei dem Verfahren wird z. B. auch 2-Methylbuten-(2), ein trisubstituiertes Ethylen, eingesetzt, wobei in hohen Ausbeuten (1,2-Dimethylprop-1-yl) dimethylchlorsilan erhalten wird. Die Addition von z. B. Dimethylchlorsilan erfolgt praktisch nur am monosubstituierten C-Atom des trisubstituierten Ethylens, nicht aber am disubstituierten C-Atom. Auch in der anderen Fachliteratur ist nicht beschrieben, dass die Addition am disubstituierten C-Atom eines Ethylens erfolgen könnte.

Ein Gegenstand vorliegender Erfindung sind Verbindungen der Formel I

$$X^m \left[ -\overset{R^1}{\underset{R^2}{Si}} - \overset{R^3}{\underset{R^5}{C}} - \overset{R^4}{\underset{R^6}{CH}} \right]_m \qquad (I)$$

worin X für eine Estergruppe einer anorganischen oder organischen Säure und m für eine Zahl von 1 bis 4 stehen, $R^1$ und $R^2$ unabhängig voneinander lineares oder verzweigtes $C_1$-$C_{12}$-Alkyl oder unsubstituiertes oder mit $C_1$-$C_6$-Alkyl substituiertes Benzyl, $C_5$- oder $C_6$-Cycloalkyl oder $R^1$ und $R^2$ zusammen Tetra- oder Pentamethylen bedeuten une $R^3$ bis $R^6$ unabhängig voneinander lineares oder verzweigtes $C_1$-$C_{12}$-Alkyl, unsubstituiertes oder mit $C_1$-$C_6$-Alkyl substituiertes Phenyl oder Phenyl-$C_nH_{2n}$ — mit n = 1 bis 6, oder $C_5$- oder $C_6$-Cycloalkyl sind, $R^3$ und $R^5$ zusammen und/oder $R^4$ und $R^6$ zusammen für Tetra- oder Pentamethylen oder $R^3$ und $R^4$ zusammen und/oder $R^5$ und $R^6$ zusammen Tri- oder Tetramethylen sind, wobei einer der Reste $R^1$ bis $R^6$ mindestens 2 C-Atome enthält, wenn X Halogenid oder der Rest einer Carbonsäure ist.

X in seiner Bedeutung als Estergruppe ist bevorzugt der um mindestens ein acides H-Atom verminderte Rest einer ein- bis vierbasischen anorganischen oder organischen Säure.

Bei den anorganischen Säuren kann es sich um Sauerstoffsäuren und um sauerstofffreie Säuren handeln. Unter letzteren sind Chlor- und Bromwasserstoffsäure (X = Cl oder Br) bevorzugt. Geeignete Sauerstoffsäuren sind z. B. $H_2SO_4$, $FSO_3H$, $HClO_4$, $H_3PO_3$ und $H_3PO_4$. Weitere geeignete Sauerstoffsäuren sind Sulfonsäuren, z. B. Alkyl- und Arylsulfonsäuren wie Methylsulfonsäure, Phenylsulfonsäure oder Paramethylphenylsulfonsäure, oder z. B. teil- oder perfluorierte Sulfonsäuren wie Fluormethylsulfonsäure, Difluormethylsulfonsäure, Trifluormethylsulfonsäure.

Geeignete organische Säuren sind z. B. aliphatische und aromatische Carbonsäuren wie Ameisensäure, Essigsäure, Chloressigsäure, Trichloressigsäure, Fluoressigsäure, Trifluoressigsäure, Propionsäure, Oxalsäure, Malonsäure, Bernsteinsäure, Adipinsäure, Cyclohexancarbonsäure, Cyclohexan-1,4-dicarbonsäure, Benzoesäure, Phenylessigsäure, Terephthalsäure, Isophthalsäure, Trimellitsäure und Pyromellitsäure.

Besonders bevorzugt stellt X —Cl, —Br, $CH_3SO_3$ oder $CF_3SO_3$— dar und insbesondere Cl.

In Formel I steht m bevorzugt für die Zahlen 1 bis 3, besonders 1 oder 2 und insbesondere für die Zahl 1.

In einer bevorzugten Ausführungsform stellen $R^1$ und $R^2$ gleiche Reste dar. $R^1$ und $R^2$ sind bevorzugt $C_1$-$C_6$-Alkyl, besonders $C_1$-$C_4$-Alkyl.

Beispiele für $R^1$ und $R^2$ sowie $R^3$ bis $R^6$ als Alkyl sind Methyl, Ethyl, n-Propyl, Isopropyl, n-Butyl, Isobutyl, Tertiärbutyl, Pentyl, Hexyl, Heptyl, Octyl, Decyl und Dodecyl. Besonders bevorzugt sind $R^1$ und $R^2$ Methyl.

Beispiele für $R^1$ und $R^2$ als substituiertes Benzyl sind Trimethylbenzyl, Propylbenzyl, Butylbenzyl, Methylbenzyl, Ethylbenzyl und Dimethylbenzyl.

Beispiele für $R^1$ und $R^2$ als Cycloalkyl sind Cyclopentyl, Methylcyclopentyl, Cyclohexyl und Methylcyclohexyl.

$R^3$ bis $R^6$ enthält als Alkyl bevorzugt 1 bis 6 C-Atome, besonders 1 bis 4 C-Atome. Beispiele sind für $R^1$ und $R^2$ erwähnt worden. Bevorzugte Alkylreste sind Methyl, Ethyl, Propyl und Butyl.

$R^3$ bis $R^6$ als substituiertes Phenyl kann z. B. Methylphenyl, Dimethylphenyl oder Ethylphenyl sein. In der Formel Phenyl-$C_nH_{2n}$— ist n bevorzugt 1 oder 2. Beispiele sind Benzyl, Methylbenzyl, Ethylbenzyl, Phenylethyl und Methylphenylethyl.

In einer bevorzugten Ausführungsform bedeuten $R^3$ bis $R^6$ in Formel I unabhängig voneinander $C_1$-$C_6$-Alkyl, Cyclopentyl oder Cyclohexyl oder stehen $R^3$ und $R^5$ und/oder $R^4$ und $R^6$ für Pentamethylen oder $R^3$ und $R^4$ und/oder $R^5$ und $R^6$ für Tetramethylen.

In einer anderen bevorzugten Ausführungsform stehen $R^3$ bis $R^6$ als Alkyl unabhängig voneinander für Methyl, Ethyl, Propyl, i-Propyl, n-Butyl, i-Butyl oder t-Butyl.

In einer weiteren bevorzugten Ausführungsform bedeuten X Cl und $R^1$ und $R^2$ Methyl und stehen einer der Reste $R^3$ bis $R^6$ für Ethyl und die anderen für Methyl, oder $R^3$ und $R^4$ für Ethyl und $R^5$ und $R^6$ für Methyl, oder $R^3$ bis $R^6$ für Ethyl.

Es wurde überraschend gefunden, dass Verbindungen der Formel Ia, worin X Cl oder Br bedeutet, in hohen Ausbeuten und Reinheiten erhalten werden, wenn man die Addition von disubstituierten Chlorsilanen an tetrasubstituierte Ethylene mit Aluminiumhalogeniden katalysiert. Trotz des hohen Verzweigungsgrades werden praktisch keine Isomerisierungen der tetrasubstituierten Ethylene beobachtet.

Ein weiterer Gegenstand der Erfindung ist ein Verfahren zur Herstellung von Verbindungen der Formel Ia

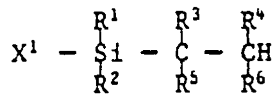

(Ia)

worin $X^1$ für Cl oder Br steht, $R^1$ und $R^2$ unabhängig voneinander lineares oder verzweigtes $C_1$-$C_{12}$-Alkyl, $C_5$- oder $C_6$-Cycloalkyl oder unsubstituiertes oder mit $C_1$-$C_6$-Alkyl substituiertes Benzyl oder $R^1$ und $R^2$ zusammen Tetra- oder Pentamethylen bedeuten und $R^3$ bis $R^6$ unabhängig voneinander lineares oder verzweigtes $C_1$-$C_{12}$-Alkyl, unsubstituiertes oder mit $C_1$-$C_6$-Alkyl substituiertes Phenyl oder Phenyl-$C_nH_{2n}$— mit n = 1 bis 6, oder $C_5$- oder $C_6$-Cycloalkyl sind, $R^3$ und $R^5$ zusammen und/oder $R^4$ und $R^6$ zusammen für Tetra- oder Pentamethylen oder $R^3$ und $R^4$ zusammen und/oder $R^5$ und $R^6$ zusammen Tri- oder Tetramethylen sind, durch Addition eines Monohalogensilanes der Formel II

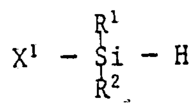

(II)

worin $R^1$, $R^2$ und $X^1$ die zuvor angegebene Bedeutung haben, an ein substituiertes Ethylen in Gegenwart von katalytischen Mengen Aluminiumtrichlorid, Aluminiumtribromid, Alkylaluminiumdichlorid, Alkylaluminiumdibromid, Aluminiumoxidchlorid, Aluminiumoxidbromid, oder Mischungen davon bei Temperaturen von höchstens 60 °C, das dadurch gekennzeichnet ist, dass das Ethylen ein tetrasubstituiertes Ethylen der Formel III

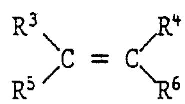

(III)

ist, worin $R^3$ bis $R^6$ die zuvor angegebene Bedeutung haben.

Für $R^1$ bis $R^6$ gelten die zuvor angegebenen Bevorzugungen, wobei zusätzlich $R^1$ bis $R^6$ auch besonders Methyl sein kann.

Die Alkylgruppe im Alkylaluminiumdichlorid bzw. -dibromid enthält vorzugsweise 1 bis 12, besonders 1 bis 6 und insbesondere 1 bis 4 C-Atome. Beispiele sind Methyl, Ethyl, n-Propyl, i-Propyl, n-Butyl, i-Butyl, t-Butyl, Pentyl, Hexyl, Octyl, Decyl, Dodecyl.

Als Katalysator wird vorzugsweise $AlCl_3$ und/oder $C_1$-$C_4$-Alkyl-$AlCl_2$ verwendet. Die Reaktionstemperatur beträgt bevorzugt 0 bis 60 °C, besonders 20 bis 40 °C. Die Reaktion ist exotherm und zur Einhaltung der Reaktionstemperatur muss im allgemeinen gekühlt werden. Der Katalysator kann in Mengen von 0,01 bis 20 Gew.%, besonders 0,1 bis 10 Gew.%, insbesondere 0,1 bis 5 Gew.%, bezogen auf die Reaktanden, verwendet werden.

Die Reaktion wird bevorzugt unter Schutzgasatmosphäre, z. B. Stickstoff, Helium oder Argon durchgeführt. Die Anwendung von Ueberdruck ist zweckmässig, wenn gasförmige Reaktanden eingesetzt werden. Da die Reaktanden meist Flüssigkeiten sind, erübrigt sich die Verwendung von inerten Lösungsmitteln. Zur Vermeidung der Bildung von Hydrolysenebenprodukten ist auf den Ausschluss von Feuchtigkeit zu achten.

Die Aufarbeitung der Reaktionsprodukte erfolgt nach üblichen Methoden, wobei im allgemeinen zunächst der Katalysator abgetrennt wird, z. B. durch Zugabe eines Lösungsmittels (Kohlenwasserstoffe) für das Reaktionsprodukt und Filtrieren. Danach kann das Lösungsmittel entfernt und das Rohprodukt nach bekannten Verfahren gereinigt werden, z. B. durch Destillation und/oder chromatographischen Verfahren. In vielen Fällen kann das gewünschte Silan durch direkte Destillation des Reaktionsgemisches isoliert werden.

Verbindungen der Formel I, worin X die Estergruppe einer Sauerstoffsäure darstellt, können durch Umsetzung von Verbindungen der Formel Ia mit Sauerstoffsäuren unter Abspaltung von HBr bzw. HCl, in an sich bekannter Weise hergestellt werden. Die Reaktion kann in einem inerten Lösungsmittel und gegebenenfalls unter Zusatz von Basen wie tertiären Aminen zur Bindung des entstehenden HCl oder HBr durchgeführt werden.

Geeignete inerte Lösungsmittel sind z. B. gegebenenfalls substituierte Kohlenwasserstoffe, Ether und Ester.

Die Verbindungen der Formel I einschliesslich (1,1,2,2-Tetramethyleth-2-yl)dimethylsilanhalogeniden und Estern von Carbonsäuren eignen sich hervorragend als Schutzgruppenreagenz. Sie weisen gegenüber bekannten Silylierungsreagenzien, z. B. Tertiärbutyldimethylchlorsilan [vgl. Synthetic Communications, 9(4), 295-299 (1979) und T.W. Greene, Protective Groups in Organic Synthesis, Seiten 43-50, John Wiley & Sons, New York] oder (1,1,2-Trimethyleth-2-yl)-dimethylchlorsilan (vgl. DE-A-28 04 204) eine wesentlich verbesserte Hydrolysestabilität auf. Die Verbindungen besitzen zudem eine erhöhte Lipophilie, die durch die Anzahl der C-Atome in den $R^3$- bis $R^6$-Gruppen beeinflusst und damit an spezifische Reaktionsbedingungen angepasst werden kann. Durch die verbesserte Hydrolysestabilität ist eine breitere Variation des Reaktionsmediums möglich.

Ein weiterer Gegenstand der Erfindung ist die Verwendung von Verbindungen der Formel Ib

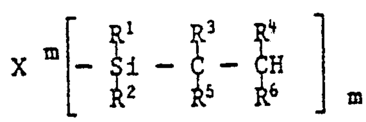

(Ib)

worin X für eine Estergruppe einer anorganischen oder organischen Säure und m für eine ganze Zahl von 1-4 steht, $R^1$ und $R^2$ unabhängig voneinander lineares oder verzweigtes $C_1$-$C_{12}$-Alkyl, $C_5$- oder $C_6$-Cycloalkyl oder unsubstituiertes oder mit $C_1$-$C_6$-Alkyl substituiertes Benzyl oder $R^1$ und $R^2$ zusammen Tetra- oder Pentamethylen bedeuten und $R^3$ bis $R^6$ unabhängig voneinander lineares oder verzweigtes $C_1$-$C_{12}$-Alkyl, unsubstituiertes oder mit $C_1$-$C_6$-Alkyl substituiertes Phenyl oder Phenyl-$C_nH_{2n}$— mit n = 1 bis 6, oder $C_5$- oder $C_6$-Cycloalkyl sind, $R^3$ und $R^5$ zusammen und/oder $R^4$ und $R^6$ zusammen für Tetra- oder Pentamethylen oder $R^3$ und $R^4$ zusammen und/oder $R^5$ und $R^6$ zusammen Tri- oder Tetramethylen sind, als abspaltbares Schutzgruppenreagenz für Hydroxyl-, Mercapto-, Carboxyl-, Amino- und Amidgruppen.

Ein weiterer Gegenstand vorliegender Erfindung ist ein Verfahren zum Schützen von Hydroxyl- Mercapto-, Carboxyl-, Amino- und Amidgruppen bei organischen Synthesen, das dadurch gekennzeichnet ist, dass man eine organische Verbindung mit Hydroxyl-, Mercapto-, Carboxylgruppen oder ihre Alkalisalze, Amino- und/oder Amidgruppen, oder einen Aldehyd oder ein Keton mit einem α-H-Atom, mit einer Verbindung der Formel I

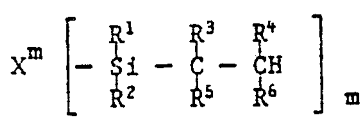

(Ib)

umsetzt, und nach Durchführung der Synthesereaktion die Schutzgruppe in an sich bekannter Weise abspaltet.

Für $R^1$ bis $R^6$ gelten die zuvor angegebenen Bevorzugungen, wobei $R^1$ bis $R^6$ bevorzugt auch für Methyl steht. Als Alkalisalze von Alkoholen, Thiolen und Carbonsäuren sind z. B. die Lithiumsalze und besonders die Natriumsalze geeignet.

Die Amino- bzw. Amidgruppen können durch aliphatische oder aromatische Gruppen teilweise substituiert sein. Die Amidgruppe kann ferner in Form eines Lactames vorliegen.

Geeignete Aldehyde und Ketone entsprechend den Formeln IV und V

$R^7R^8$ CH—CHO (IV) 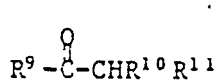 (V)

Bei der Umsetzung mit einem Schutzgruppenreagenz der Formel Ib bilden sich hierbei Vinylsilylether der Formeln IVa und Va.

$$R^7R^8\,C = CH{-}OR^{12} \quad (IVa) \qquad R^9{-}\overset{\displaystyle OR^{12}\atop|}{C}{=}CR^{10}R^{11} \quad (Va)$$

$R^7$, $R^8$, $R^{10}$ und $R^{11}$ stellen einen ein Wasserstoffatom oder organischen Rest dar, der vorzugsweise 1 bis 30, besonders 1 bis 20 und insbesondere 1 bis 16 C-Atome enthält. $R^9$ ist ein solcher organischer Rest. $R^{12}$ ist der Rest

$$-\underset{R^2}{\overset{R^1}{Si}}-\underset{R^5}{\overset{R^3}{C}}-\underset{R^6}{\overset{R^4}{CH}}$$

$R^7$, $R^8$, $R^9$, $R^{10}$ und $R^{11}$ als organischer Rest kann z. B. ein aliphatischer, cycloaliphatischer, heterocyclischer, aromatischer oder heteroaromatischer Rest sein. Die Reste können unsubstituiert oder z. B. mit $C_1$-$C_{12}$-Alkyl, $C_1$-$C_{12}$-Alkoxy, $C_1$-$C_{12}$-Alkylthio, Halogen wie F, Cl und Br, Phenyl oder Benzyl substituiert sein.

Der aliphatische Rest kann lineares oder verzweigtes Alkyl sein, insbesondere mit 1 bis 12 C-Atomen. Der cycloaliphatische Rest kann 3 bis 12, besonders 3 bis 7-Ring-C-Atome enthalten. Der heterocyclische Rest kann 1 bis 3 Heteroatome und insgesamt 3 bis 7 Ringglieder enthalten. Der heteroaromatische Rest enthält bevorzugt 1 oder 2 Heteroatome und bevorzugt insgesamt 5 oder 6 Ringglieder. Der aromatische Rest ist bevorzugt Phenyl, Naphthyl, Anthranyl und Phenanthryl.

$R^7$ und $R^8$ sowie $R^9$ und $R^{10}$ können zusammen mit den C-Atomen, an die sie gebunden sind, auch einen cycloaliphatischen oder heterocyclischen Rest mit insgesamt 3 bis 7 Ringgliedern und vorzugsweise 1 oder 2 Heteroatomen, bilden. Die heterocyclischen Reste sind nicht über Heteroatome an die CH-Gruppen bzw. CO-Gruppen in den Formeln IV und V gebunden.

Die Einführung der Schutzgruppe erfolgt in üblicher Weise unter schonenden Bedingungen meist bei Raumtemperatur bis zu Temperaturen von etwa 100 °C durch die Umsetzung einer Verbindung der Formel I mit einer Verbindung, die die zu schützende Gruppe (latent) enthält, gegebenenfalls in Gegenwart einer organischen Base als Bindemittel für entstehende Säuren. Geeignete organische Basen sind bevorzugt tertiäre Amine, z. B. Trimethylamin, Triethylamin, Tributylamin, N-Methylpiperidin, N-Methylpyrrolidin, Pyridin oder Imidazol. Die Reaktion wird im allgemeinen in Gegenwart von inerten Lösungsmitteln durchgeführt. Besonders geeignet sind polare Lösungsmittel wie Ether, N-substituierte Lactame oder N-disubstituierte Säureamide, z. B. Dioxan, Dibutylether, Tetrahydrofuran, Dimethylformamid, Dimethylacetamid, Hexamethylphosphorsäuretriamid und N-Methylpyrrolidon.

Die Isolierung der geschützten Verbindung erfolgt nach üblichen Methoden, z. B. Destillation, Kristallisation oder Chromatographie. Die Herstellung von Verbindungen mit einer erfindungsgemässen Schutzgruppe aus reaktionsträgen Verbindungen, wie z. B. tertiären Alkoholen, erfolgt zweckmässig in der Weise, dass man entsprechende Silylester von starken Säuren, wie z. B. Trifluormethansulfonsäure, in Gegenwart einer Base mit einer Verbindung umsetzt, die die zu schützende Gruppe enthält.

Die Abspaltung der Silylschutzgruppe erfolgt nach üblichen Methoden durch die Einwirkung von wässrigen Säuren oder Basen, vorteilhaft in Gegenwart eines inerten Lösungsmittels, durch die Einwirkung von Lewissäuren, von quaternären Ammoniumfluoriden oder die Einwirkung von HF/Harnstoffgemischen. Das bei der Hydrolyse gebildete Silanol kann in einfacher Weise mit z. B. $SOCl_2$ oder $PCl_3$ oder $PCl_5$ in das Chlorsilan der Formel Ia überführt werden.

Die nachfolgenden Beispiele erläutern die Erfindung näher.

A) Herstellung von Monochlorsilanen

### Beispiel 1

Herstellung von (1,1,2,2-Tetramethyleth-1-yl)dimethylchlorsilan

100 ml (0,92 mol) Dimethylchlorsilan und 3,8 g (0,028 mol) Aluminiumchlorid werden in einem 500 ml Dreihalskolben mit Rückflusskühler und Tropftrichter vorgelegt. Innerhalb 1 Std. werden 109,5 ml (0,92 mol) Tetramethylethylen zugetropft. Durch externe Kühlung wird die Reaktionstemperatur im Bereich von 25-30 °C gehalten. Nach 4 Std. wird die Reaktionslösung vom ungelösten Aluminiumchlorid abfiltriert und anschliessend destilliert.

Man erhält 141 g Produkt (86 % Ausbeute), Kp. : 62-64 °C/20,8 mbar. Das $^1$H-NMR-Spektrum stimmt mit der Struktur überein.

### Beispiel 2

Herstellung von (1,1,2,2-Tetraethyl-eth-1-yl)dimethylchlorsilan

2,1 g Tetraethyläthylen, 2 ml (18 mmol) Dimethylchlorsilan und 200 mg $AlCl_3$ werden gemäss Beispiel

1 umgesetzt. Nach 2 Std. wird das Reaktionsgemisch mit Pentan verdünnt und der Niederschlag abfiltriert. Dem Filtrat wird unter Vakuum das Pentan entzogen und der Rückstand destilliert. Man erhält 2,8 g (80 % der Theorie) Produkt als farblose Flüssigkeit. Kp. = 75-80 °C/0,195 mbar.

| | | | | | |
|---|---|---|---|---|---|
| Analyse | : ber. : | C 61,36 | H 11,59 | Cl 15,09 | Si 11,96 |
| ($C_{12}H_{27}ClSi$) : | gef. : | C 61,69 | H 11,49 | Cl 14,88 | Si 12,08 |

Beispiel 3

Herstellung von (1,2-Diethyl-1,2-dimethyleth-1-yl)-dimethylchlorsilan

Gemäss Beispiel 2 werden 200 mg 3,4-Dimethylhex-3-en, 0,2 ml (1,8 mmol) Dimethylchlorsilan und 50 mg (0,37 mmol) $AlCl_3$ umgesetzt und aufgearbeitet. Man erhält 180 mg (50 % der Theorie) einer farblosen Flüssigkeit mit einem Kp = 95-97 °C/0,26 mbar.

Beispiel 4

Herstellung von

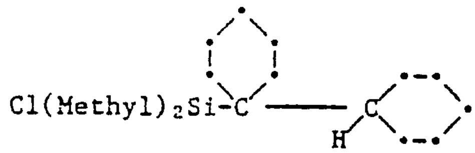

Gemäss Beispiel 2 werden 1,1 g 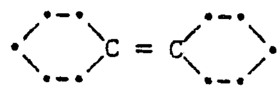

1 ml (9 mmol) Dimethylchlorsilan und 150 mg $AlCl_3$ umgesetzt und aufgearbeitet. Man erhält 1,2 g (67 % der Theorie) eines farblosen Oels mit einem Kp = 100-150 °C/0,065 mbar.

Beispiel 5

Herstellung von

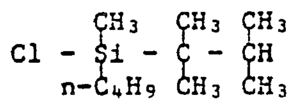

12,0 g (0,088 mol) Methyl-butyl-chlorsilan, hergestellt aus Methyl-dichlorsilan und n-Butyl-Lithium, und 1,17 g (8,8 mmol) Aluminiumchlorid werden in einem 100 ml Dreihalskolben mit Rückflusskühler und Tropfrichter vorgelegt. Innerhalb von 15 Min. werden 7,4 g (0,088 mol) Tetramethylethylen zugetropft. Durch externe Kühlung wird die Reaktionstemperatur im Bereich von 20-25 °C gehalten. Nach einer Stunde wird das Produkt durch Destillation isoliert.

Man erhält 15,6 g Produkt, Kp. : 98-100 °C/20,8 mbar. (80 % der Theorie). Das $^{1}H$-NMR-Spektrum stimmt mit der Struktur überein.

Beispiel 6

Ethyl-aluminiumdichlorid als Katalysator

1,03 ml (10 mmol) Ethyl-aluminiumdichlorid werden in 21,6 ml (0,2 mol) Dimethyl-chlorsilan in einem 100 ml Dreihalskolben mit Rückflusskühler und Tropfrichter vorgelegt. Innerhalb 30 Min. werden 23,9 ml (0,2 mol) Tetramethylethylen zugetropft. Durch externe Kühlung wird die Reaktionstemperatur im Bereich von 20-25 °C gehalten. Nach einer Stunde wird die Reaktionslösung destilliert.

Man erhält 22,1 g Produkt (62 % der Theorie), Kp. : 62-64 °C/20,8 mbar.

Beispiel 7

Isopropyl-aluminiumdichlorid als Katalysator

1,37 ml (10 mmol) Isopropyl-aluminiumdichlorid werden in 21,6 ml (0,2 mol) Dimethyl-chlorsilan in einem 100 ml Dreihalskolben mit Rückflusskühler und Tropfrichter vorgelegt. Innerhalb 30 Min. werden 23,9 ml (0,2 mol) Tetramethylethylen zugetropft. Durch externe Kühlung wird die Reaktionstemperatur im Bereich von 20-25 °C gehalten. Nach einer Stunde wird die Reaktionslösung destilliert.

Man erhält 25,9 g Produkt (72 % der Theorie), Kp. : 62-64 °C/20,8 mbar.

B) Anwendungsbeispiele

Beispiel 8

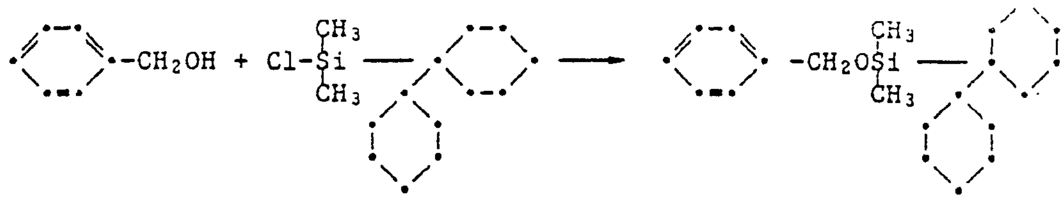

1 g (3,86 mmol) Silylchlorid werden zu einem Gemisch von 0,31 g (4,5 mmol) Imidazol und 0,46 g (4,3 mmol) Benzylalkohol in 5 ml DMF zugegeben. Nach 16 Std. Rühren bei Raumtemperatur wird wie folgt aufgearbeitet : Das Reaktionsgemisch wird mit Hexan verdünnt und mehrmals mit Wasser gewaschen. Anschliessend wird die organische Phase mit $MgSO_4$ getrocknet und eingedampft. Nach Chromatographie an Kieselgel isoliert man 1,77 g des gewünschten Silylethers (92 % der Theorie) als farbloses Oel.

| | | | | |
|---|---|---|---|---|
| Analyse : | ber. : | C 76,30 | H 10,37 | Si 8,50 |
| ($C_{21}H_{34}OSi$) : | gef. : | C 76,32 | H 10,36 | Si 8,71 |

Beispiel 9

Herstellung von

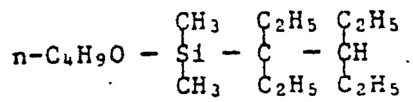

2,0 g (8,5 mmol) (1,1,2,2-Tetraethyleth-1-yl)dimethylchlorsilan werden wie in Beispiel 5 beschrieben mit 519 mg (7 mmol) n-Butanol in Gegenwart von 578 mg (8,5 mmol) Imidazol in 5 ml DMF während 16 Std. bei Raumtemperatur gerührt. Die Aufarbeitung erfolgt wie unter Beispiel 5 beschrieben.

Nach Chromatographie an Kieselgel und anschliesser Destillation isoliert man 1,71 g (90 % der Theorie) eines farblösen Oels mit einem Kp = 80-85 °C/0,0665 mbar.

Analyse :

| | | | | |
|---|---|---|---|---|
| ($C_{16}H_{36}OSi$) | ber. : | C 70,51 | H 13,31 | Si 10,31 |
| | gef. : | C 70,25 | H 13,19 | Si 10,39 |

Beispiel 10

Herstellung von

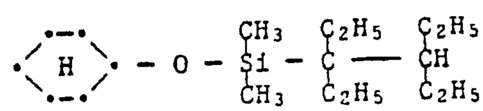

Die Umsetzung erfolgt gemäss Beispiel 9 mit Cyclohexanol anstelle von n-Butanol. Man erhält ein farbloses Oel mit einem Kp = 100-105 °C/0,039 mbar.

Analyse :

| | | | | |
|---|---|---|---|---|
| ($C_{18}H_{38}OSi$) | ber. : | C 72,41 | H 12,83 | Si 9,41 |
| | gef. : | C 72,20 | H 12,99 | Si 9,81 |

Beispiel 11

Herstellung von

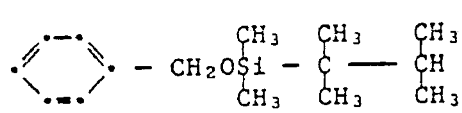

Analog wie in Beispiel 8 beschrieben werden 1,08 g (10 mmol) Benzylalkohol in Gegenwart von 1,02 g (15 mmol) Imidazol in 10 ml DMF mit 1,95 g (11 mmol) (1,1,2,2-Tetramethyleth-1-yl)dimethylchlorsilan während 16 Std. bei Raumtemperatur umgesetzt. Nach Destillation des Rohproduktes erhält man 2,15 g (86 % der Theorie) eines farblosen Oels mit einem Kp = 105-110 °C/0,026 mbar.

Analyse :

| | | | | |
|---|---|---|---|---|
| ($C_{15}H_{26}OSi$) | ber. : | C 71,93 | H 10,46 | Si 11,21 |
| | gef. : | C 71,80 | H 10,38 | Si 11,34 |

Beispiel 12

Herstellung von

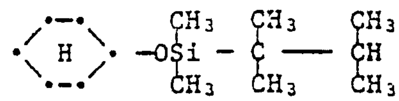

Analog Beispiel 8 werden 1,0 g (10 mmol) Cyclohexanol in Gegenwart von 1,02 g (15 mmol) Imidazol in 10 ml DMF mit 1,96 g (11 mmol) (1,1,2,2-Tetramethyleth-1-yl)dimethylchlorsilan während 16 Std. bei Raumtemperatur umgesetzt. Die Aufarbeitung erfolgt wie beschrieben und nach Destillation des Rohprodukts erhält man 2,25 g (93 % der Theorie) eines farblosen Oels mit einem Kp = 49-51 °C/0,026 mbar.

Analyse :

| | | | | |
|---|---|---|---|---|
| ($C_{14}H_{30}SiO$) | ber. : | C 69,35 | H 12,47 | Si 11,58 |
| | gef. : | C 69,37 | H 12,23 | Si 12,01 |

Beispiel 13

Herstellung von

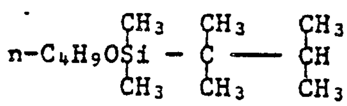

Die Umsetzung erfolgt gemäss Beispiel 8 mit

5,19 g (70 mmol) n-Butanol,
7,15 g (0,105 mmol) Imidazol
13,74 g (1,1,2,2-Tetramethyleth-1-yl)dimethylchlorsilan in 50 ml Dimethylformamid (DMF).
Ausbeute : 13,17 g (87 % der Theorie) ; Kp = 104-106 °C/26 mbar.

Analyse :

| | | | | |
|---|---|---|---|---|
| ($C_{12}H_{28}SiO$) | ber. : | C 66,59 | H 13,04 | Si 12,98 |
| | gef. : | C 66,41 | H 13,13 | Si 13,34 |

Beispiel 14

Herstellung von

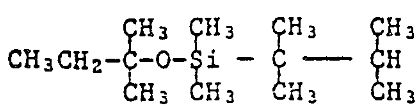

a) Herstellung Trifluormethansulfonsäure(1,1,2,2-tetramethyleth-1-yl)dimethylsilylester.

50 ml Trifluormethansulfonsäure werden bei Raumtemperatur unter Argon langsam zu 101,57 g (0,57 mol) (1,1,2,2-Tetramethyleth-1-yl)-dimethylchlorsilan zugetropft. Anschliessend wird das Gemisch während 8 Std. auf 60 °C erhitzt. Dabei kommt die HCl Entwicklung zum Stillstand. Durch Destillation erhält man 111 g (67 % der Theorie) eines farblosen Oels mit einem Kp = 123-124 °C/28;6 mbar. Das $^1$H-NMR-Spektrum stimmt mit der Struktur überein.

b) Umsetzung des Silylesters gemäss a) mit 2-Methylbutan-2-ol.

Zu 22,44 g (0,07 mol) Silylester in 100 ml Methylenchlorid werden bei 0 °C unter Argon ein Gemisch von 9,75 g (0,091 mol) 2,6 Lutidin und 6,17 g 0,07 mol) 2-Methyl-2-butanol zugetropft. Nach 4 Std. Rühren bei Raumtemperatur wird auf Eis gegossen und die Mischung mit Hexan extrahiert.

Die vereinigten Hexan-Phasen werden mit Wasser gewaschen, mit $MgSO_4$ getrocknet und am Vakuum eingeengt. Aus 15,65 g Rohprodukt isoliert man durch Destillation 13,5 g eines farblosen Oels (84 % der Theorie) mit einem Kp = 118-120 °C/30 mbar.

Analyse :

| | | | | |
|---|---|---|---|---|
| ($C_{13}H_{30}SiO$) | ber. : | C 67,75 | H 13,12 | Si 12,19 |
| | gef. : | C 68,01 | H 12,96 | Si 12,52 |

Beispiel 15

Herstellung von

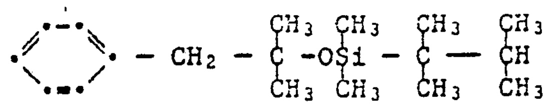

20,44 g (0,07 mol) Silylester gemäss Beispiel 14a in 80 ml Methylenchlorid werden vorgelegt. Unter Argon werden bei 5 °C ein Gemisch von 9,75 g (0,091 mol) 2,6-Lutidin und 10,5 g (0,07 mol) 2-Methyl-1-phenyl-2-propanol zugetropft. Anschliessend wird das Gemisch bei Raumtemperatur 8 Std. gerührt. Das Gemisch wird auf Eis gegossen und mit Hexan extrahiert. Die vereinigten Hexan-Phasen werden mit Wasser gewaschen und anschliesend mit $MgSO_4$ getrocknet. Das Hexan wird am Vakuum entfernt und der Rückstand an Kieselgel chromatographiert. Man erhält 16,79 g einer farblosen Flüssigkeit (82 % der Theorie). Kp. = 84-85 °C/0,026 mbar.

Analyse :

| | | | | |
|---|---|---|---|---|
| ($C_{18}H_{32}OSi$) | ber. : | C 73,90 | H 11,03 | Si 9,60 |
| | gef. : | C 73,79 | H 11,21 | Si 9,80 |

Beispiel 16

Herstellung von

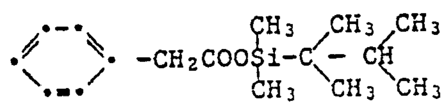

Zu einer Lösung von 7,8 g (0,044 mol) (1,1,2,2-Tetramethyleth-1-yl)-dimethylchlorsilan und 4,8 g (0,047 mol) Triäthylamin in 50 ml Dimethylformamid werden portionenweise 5,0 g (0,037 mol) Phenylessigsäure zugegeben. Das Gemisch wird bei Raumtemperatur während 2 Std. gerührt und danach mit Hexan aufgenommen. Die Hexanphase wird mit $Na_2SO_4$ getrocknet und der Eindampfrückstand an Kieselgel mit Hexan/Essigester chromatographiert und danach destilliert. Man erhält 6,11 g (59 % der Theorie), Kp = 134-136 °C/2 mbar. Das $^1$H-NMR-Spektrum stimmt mit der Struktur überein.

Beispiel 17

Herstellung von

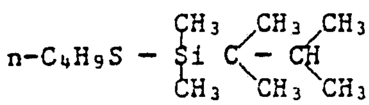

Unter Argon werden zu 2,3 g (0,1 mol) Natrium in 50 ml Hexan langsam 9,1 g (0,09 mol) Butylmerkaptan in 50 ml Hexan zugetropft. Man rührt über Nacht bei Raumtemperatur und erhitzt anschliessend während 1 Std. unter Rückfluss. Danach wird unter Eisbadkühlung langsam 16,0 g (0,09 mol) (1,1,2,2-Tetramethyleth-1-yl)dimethylchlorsilan in 25 ml Hexan zugetropft. Nach 2 Std. Erhitzen unter Rückfluss wird im Vakuum eingeengt und der Rückstand destilliert. Man erhält 13,2 g Oel mit einem Kp. von 128-130 °C/2,6 mbar. Das $^1$H-NMR-Spektrum stimmt mit der Struktur überein.

Beispiel 18

Herstellung von

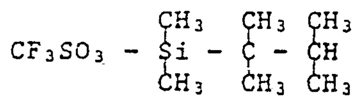

17,85 g (0,1 mol) (1,1,2,2-Tetramethyleth-1-yl)-dimethylchlorsilan werden unter Inertgas in einem 50 ml Dreihalskolben mit Tropftrichter und Rückflusskühler vorgelegt. Innerhalb 10 Min. werden bei Raumtemperatur 8,79 ml (0,1 mol) Trifluormethansulfonsäure zugetropft. Anschliessend wird während 4 Std. auf 60 °C erwärmt. Nach Beendigung der HCl-Gasentwicklung wird das Gemisch abgekühlt und anschliessend destilliert.

Man isoliert 23,4 g des gewünschten Silylesters (80 % der Theorie) als farblose Flüssigkeit, Kp. 39-42 °C/0,026 mbar.

Beispiel 19

Herstellung von

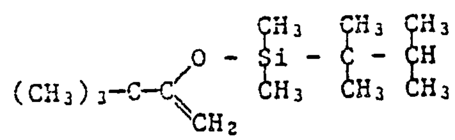

2,0 g (20 mmol) Pinakolin und 2,22 g (22 mmol) Triethylamin werden in 20 ml Ether unter Inertgas auf 0 °C gekühlt. Unter Rühren werden bei 0-5 °C 4,88 g (22 mmol) (1,1,2,2-Tetramethylethy-1-yl)dimethylchlorsilan zugetropft. Anschliessend wird bei Raumtemperatur 4 Std. weitergerührt. Die Etherphase wird abgetrennt und im Kugelrohrofen destilliert. Man erhät 3,5 g eines farblosen Oels (72 % der Therorie), Kp. 105-110 °C/20,8 mbar.

$^1$H-NMR ($CDCl_3$, 250 MHz) : δ : 0,22 (s. 6H, $Si(CH_3)$), 0,94 (d. J = 6 Hz, 6 H, $(CH_3)_2CH$) ; 0,96 (s, 6 H, $(CH_2)_2C$) ; 1,06 (s, 9 H, $C(CH_3)_3$) ; 1,70 (m, 1 H, $HC(CH_3)_2$), 5,89 (d J = 0,5 Hz, 1 H = CH), 4,03 (d, J = 0,5 Hz, 1 H).

Beispiel 20

Herstellung von

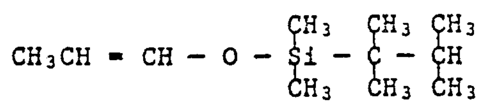

1,16 g (20 mmol) Propionaldehyd und 2,22 g (22 mmol) Triethylamin werden in 20 ml Ether unter Inertgas auf 0 °C gekühlt. Unter Rühren werden bei 0-5 °C 4,88 g (22 mmol) 1,1,2,2-Tetramethyleth-1-yl)dimethylchlorsilan zugetropft. Anschliessend wird bei Raumtemperatur 4 Std. weitergerührt. Die Etherphase wird abgetrennt und im Kugelrohr destilliert. Man erhält 2,45 g eines farblosen Oels (62 % der Theorie), Kp. 125-130 °C/20,8 mbar.

$^1$H-NMR ($CDCl_3$, 250 $MH_2$) : δ : 0,16 (s, 6H, $Si(CH_3)_2$) ; 0,90 (s, 6H, $(CH_3)_2C$) ; 0,94 (d, J = 6 Hz, 6H, $(CH_3)_2CH$) ; 1,57 (dd, J = 6 Hz, 0,5 Hz, 3H, $CH_3CH$) ; 1,65 (m, 1H, $CH(CH_3)_2$ ; 4,60 (m, 1H =CH—$CH_3$) ; 6,17 (m, 1H, CH-O).

Beispiel 21

Herstellung von

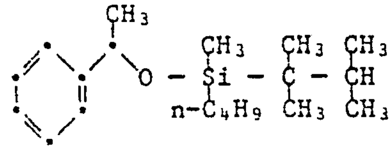

6,4 g (29 mmol) Methyl-butyl-(1,1,2,2-tetramethyleth-1-yl)-chlorsilan werden zu einem Gemisch von 2,49 g (36,5 mmol) Imidazol und 2,95 g (24 mmol) 1-Phenyl-ethanol in 30 ml DMF gegeben. Nach 16 Std. Rühren bei Raumtemperatur wird wie in Beispiel 8 beschrieben aufgearbeitet. Nach Destillation im Kugelrohrofen isoliert man 6,54 g des gewünschten Silylethers (76 % der Theorie) als farbloses Oel. Kp. : 115-120 °C/0,26 bar.

Beispiel 22

Herstellung von

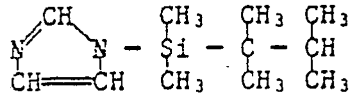

17,9 g (0,1 mol) (1,1,2,2-Tetramethyleth-1-yl)dimethylsilyl-chlorid, 6,8 g (0,1 mol) Imidazol und 60 ml Triethylamin werden zusammengegeben und während 40 Std. bei Raumtemperatur gerührt. Anschliessend wird mit 100 ml Hexan verdünnt, filtriert und eingeengt. Destillation des so erhaltenen Rückstandes liefert 17,3 g (82 % der Theorie) Produkt Sdp. 79-81 °C/0,065 mbar.

Beispiel 23

Herstellung von

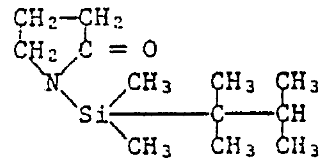

46,1 g (0,26 mol) (1,1,2,2-Tetramethyleth-1-yl)dimethylsilylchlorid, 28,1 g (0,28 mol) Triethylamin und 17 g (0,2 mol) Pyrrolidon werden während 3,5 Std. in 100 ml Dimethylformamid bei Raumtemperatur gerührt. Anschliessend wird mit 200 ml Hexan verdünnt und mit eiskaltem Wasser und 1-molarer wässriger Oxalsäure gewaschen. Trocknen der Hexanphase mit Natriumsulfat und Einengen liefert nach Destillation 40,6 g (90 % der Theorie), Produkt, Sdp. 78-82 °C/0,026 mbar.

Beispiel 24

Herstellung von

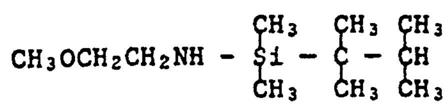

20 g (0,27 mol) 1-Amino-2-methoxyethan und 57 (0,32 mol) (1,1,2,2-Tetramethyleth-1-yl) dimethylsilylchlorid werden in 100 ml Hexan mit 80,7 g (0,8 mol) Triethylamin versetzt und bei Raumtemperatur während 3,5 Stunden gerührt. Anschliessend wird mit 100 ml Hexan verdünnt, filtriert und der Eindampfrückstand destilliert : 37,7 g (58 % der Theorie), Produckt mit Sdp. 54-58 °C/0,065 mbar.

Beispiel 25

Herstellung von

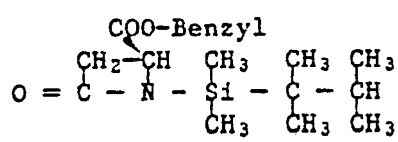

127,0 g (1,1,2,2-Tetramethyleth-1-yl) dimethylchlorsilan (0,71 mol) werden in 500 ml Dimethylformamid gelöst und mit 72,4 g Triethylamin (0,72 mol) versetzt. Unter Wasserbadkühlung werden portionenweise 132,3 g (4S)-Azetidin-2-on-4-carbonsäurebenzylester (0,645 mol) eingetragen, so dass die Innentemperatur 25-30 °C beträgt. Die resultierende weisse, dicke Suspension wird anschliessend während 2 Std. bei Raumtemperatur gerührt. Das Gemisch wird mit 1 000 ml Hexan aufgenommen und nacheinander mit 1 000 ml Wasser, 80 ml 1-molarer Oxalsäure und 2 × 1 000 ml Wasser gewaschen. Nach Trocknen mit Natriumsulfat und Abdestillieren des Hexans erhält man einen leicht gelblichen Eindampfrückstand.

Ausbeute : 225,7 g entsprechend 99 % der Theorie. Das Dünnschichtchromatogramm (Kieselgel, Laufmittel Hexan/Essigsäurethylester (2 : 1) zeigt ein einheitliches Produkt. $R_f$-Wert : 0,58.

Beispiel 26

Die in nachfolgender Tabelle bezeichneten Silylether werden unter den angegebenen Reaktionsbedingungen bei Raumtemperatur gespalten. Die Ergebnisse sind in der Tabelle angegeben.

| Reaktionsbedingungen | 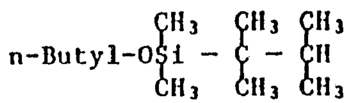 | 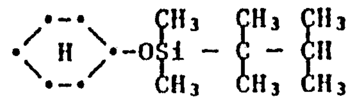 | 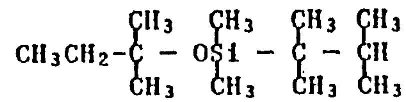 |
|---|---|---|---|
| 1 % HCl/Ethanol(EtOH) | vollständige Spaltung nach 30 Minuten | vollständige Spaltung nach 137 Minuten | keine Spaltung nach 6 Std. 16 % Spaltung nach 72 Std. |
| n-$Bu_4$ NF/Tetrahydrofuran (THF) | vollständige Spaltung nach < 3 Stunden | vollständige Spaltung nach ca. 24 Stunden | keine Spaltung |
| THF-:Essisäure: $H_2O$= 1 : 3 : 1 | vollständige Spaltung nach 24 Stunden | 20 % Spaltung nach 24 Stunden<br>50 % Spaltung nach 48 Stunden | keine Spaltung |
| NaOH(5 %)/EtOH | keine Spaltung nach 24 Stunden | stabil innerhalb 24 Stunden | keine Spaltung |
| n-$Butyl_4NF$ auf Kieselgel | vollständige Spaltung nach < 4 Stunden | 30 % Spaltung nach 6 Stunden<br>85 % Spaltung nach 72 Stunden | keine Spaltung |
| 5 Aequivalente HF/ Harnstoff Cyclohexan | vollständige Spaltung nach ca. 25 Minuten | Spaltung vollständig nach 30 Minuten | 50 % Spaltung nach 22 Stunden<br>67 % Spaltung nach 40 Stunden |
| $BF_3$(Gas)/Cyclohexan | vollständige Spaltung nach ca. 40 Minuten | Spaltung vollständig nach 40 Minuten | Spaltung vollständig nach 20 Minuten → kein Alkohol → Buten |

Beispiel 27

Spaltung von

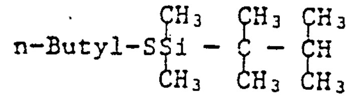

Mit HCl (1 %)/Ethanol :
Spaltung vollständig nach 24 Stunden.
Mit NaOH (5 %)/Ethanol :
Spaltung vollständig nach 3 Stunden.

Beispiel 28

Spaltung von

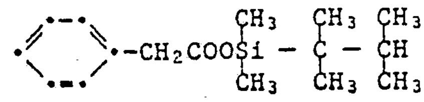

Mit HCl (1 %)/Ethanol :
Spaltung vollständig nach < 5 Minuten.
Mit NaOH (5 %)/Ethanol :
Spaltung vollständig nach < 2 Stunden.

**Patentansprüche**

1. Verbindungen der Formel I

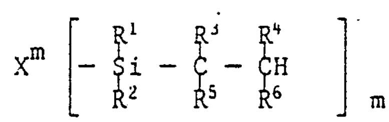

(I)

worin X für eine Estergruppe einer anorganischen oder organischen Säure und m für eine Zahl von 1 bis 4 stehen, $R^1$ und $R^2$ unabhängig voneinander lineares oder verzweigtes $C_1$-$C_{12}$-Alkyl substituiertes Phenyl oder Benzyl oder $R^1$ und $R^2$ zusammen Tetra- oder Pentamethylen bedeuten und $R^3$ bis $R^6$ unabhängig voneinander lineares oder verzweigtes $C_1$-$C_{12}$-Alkyl, unsubstituiertes oder mit $C_1$-$C_6$-Alkyl substituiertes Phenyl oder Phenyl-$C_nH_{2n}$— mit n = 1 bis 6, oder $C_5$- oder $C_6$-Cycloalkyl sind, $R^3$ und $R^5$ zusamen und/oder $R^4$ und $R^6$ zusammen für Tetra- oder Pentamethylen oder $R^3$ und $R^4$ zusammen und/oder $R^5$ und $R^6$ zusammen Tri-oder Tetramethylen sind, wobei einer der Reste $R^1$ bis $R^6$ mindestens 2 C-Atome enthält, wenn X Halogenid oder der Rest einer Carbonsäure ist.

2. Verbindungen gemäss Anspruch 1, dadurch gekennzeichnet, dass X in Formel I für —Cl, —Br oder $CH_3SO_3$— oder $CF_3SO_3$— steht.

3. Verbindungen gemäss Anspruch 1, dadurch gekennzeichnet, dass $R^1$ lund $R^2$ in Formel I unabhängig voneinander $C_1$-$C_6$-Alkyl bedeuten.

4. Verbindungen gemäss Anspruch 3, dadurch gekennzeichnet, dass $R^1$ und $R^2$ lMethyl sind.

5. Verbindungen gemäss Anspruch 1 dadurch gekennzeichnet, dass $R^3$ bis $R^6$ in Formel I unabhängig voneinander für $C_1$-$C_6$-Alkyl, Cyclopentyl oder Cyclohexyl stehen oder $R^3$ und $R^5$ und/oder $R^4$ und $R^6$ Pentamethylen oder $R^3$ und $R^4$ und/oder $R^5$ und $R^6$ Tetramethylen bedeuten.

6. Verbindungen gemäss Anspruch 5, dadurch gekennzeichnet, dass $R^3$ bis $R^6$ als Alkyl unabhängig voneinander Methyl, Ethyl, Propyl oder Butyl sind.

7. Verbindungen gemäss Anspruch 1, dadurch gekennzeichnet, dass X für Cl oder $CF_3SO_3$— und $R^1$ und $R^2$ für Methyl stehen und einer der Reste $R^3$ bis $R^6$ für Ethyl und die anderen für Methyl stehen, oder $R^3$ und $R^4$ für Ethyl $R^5$ und $R^6$ für Methyl, oder $R^3$ bis $R^6$ für Ethyl stehen.

8. Verbindungen gemäss Anspruch 1, dadurch gekennzeichnet, dass X für Cl oder $CF_3SO_3$— und $R^1$ und $R^2$ für Methyl stehen und $R^3$ und $R^5$ sowie $R^4$ und $R^6$ Pentamethylen bedeuten.

9. Verfahren zur Herstellung von Verbindungen der Formel Ia

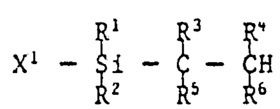

(Ia)

worin $X^1$ für Cl oder Br steht, $R^1$ und $R^2$ unabhängig voneinander lineares oder verzweigtes $C_1$-$C_{12}$-Alkyl, $C_5$- oder $C_6$-Cycloalkyl oder unsubstituiertes oder mit $C_1$-$C_6$-Alkyl substituiertes Benzyl oder $R^1$ und $R^2$ zusammen Tetra- oder Pentamethylen bedeuten und $R^3$ bis $R^6$ unabhängig voneinander lineares oder verzweigtes $C_1$-$C_{12}$-Alkyl, unsubstituiertes oder mit $C_1$-$C_{16}$-Alkyl substituiertes Phenyl oder Phenyl-$C_nH_{2n}$— mit n = 1 bis 6, oder $C_5$- oder $C_6$-Cycloalkyl sind, $R^3$ und $R^5$ zusammen und/oder $R^4$ und $R^6$ zusammen für Tetra- oder Pentamehthylen oder $R^3$ und $R^4$ zusammen und/oder $R^5$ und $R^6$ zusammen Tri- oder Tetramethylen sind, durch Addition eines Monohalogensilanes der Formel II

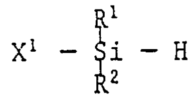

(II)

worin $R^1$, $R^2$ und $X^1$ die zuvor angegebene Bedeutung haben, an ein substituiertes Ethylen in Gegenwart von katalytischen Mengen Aluminiumtrichlorid, -tribromid, -oxidchlorid, -oxidbromid, Alkylaluminiumdichlorid, Alkylaluminiumdibromid, oder Mischungen davon bei Temperaturen von höchstens 60 °C, dadurch gekennzeichnet, dass das Ethylen ein tetrasubstituiertes Ethylen der Formel III

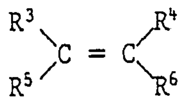

(III)

ist, worin $R^3$ bis $R^6$ die zuvor angegebene Bedeutung haben.

10. Verwendung von Silanen der Formel Ib

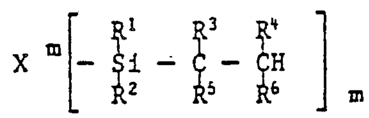

(Ib)

worin X für eine Estergruppe einer anorganischen oder organischen Säure und m für eine Zahl von 1 bis 4 stehen, $R^1$ und $R^2$ unabhängig voneinander lineares oder verzweigtes $C_1$-$C_{12}$-Alkyl, $C_5$- oder $C_6$-Cycloalkyl oder unsubstituiertes oder mit $C_1$-$C_6$-Alkyl substituiertes Benzyl oder $R^1$ und $R^2$ zusammen Tetra- oder Pentamethylen bedeuten und $R^3$ bis $R^6$ unabhängig voneinander lineares oder verzweigtes $C_1$-$C_{12}$-Alkyl, unsubstituiertes oder mit $C_1$-$C_6$-Alkyl substituiertes Phenyl oder Phenyl-$C_nH_{2n}$— mit n = 1 bis 6, oder $C_5$- oder $C_6$-Cycloalkyl sind, $R^3$ und $R^5$ zusammen und/oder $R^4$ und $R^6$ zusammen für Tetra- oder Pentamethylen oder $R^3$ und $R^4$ zusammen und/oder $R^5$ und $R^6$ zusammen Tri- oder Tetramethylen sind, als abspaltbares Schutzgruppenreagenz für Hydroxyl-, Mercapto-, Carboxyl-, Amino- und Amidgruppen.

11. Verfahren zum Schützen von Hydroxyl-, Mercapto-, Carboxyl-, Amino- und Amidgruppen bei organischen Synthesen, dadurch gekennzeichnet, dass man eine organische Verbindung mit Hydroxyl-, Mercapto-, Carboxylgruppen oder ihre Alkalisalze, Amino- und/oder Amidgruppen oder einen Aldehyd oder ein Keton mit einem α-H-Atom, mit einer Verbindung der Formel Ib

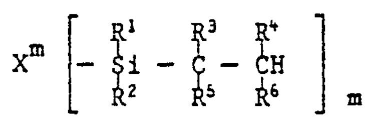

(Ib)

worin X für eine Estergruppe einer anorganischen oder organischen Säure und m für eine Zahl von 1 bis 4 stehen, $R^1$ und $R^2$ unabhängig voneinander lineares oder verzweigtes $C_1$-$C_{12}$-Alkyl, $C_5$- oder $C_6$-Cycloalkyl oder unsubstituiertes oder mit $C_1$-$C_6$-Alkyl substituiertes Benzyl oder $R^1$ und $R^2$ zusammen Tetra- oder Pentamethylen bedeuten und $R^3$ bis $R^6$ unabhängig voneinander lineares oder verzweigtes $C_1$-$C_{12}$-Alkyl, unsubstituiertes oder mit $C_1$-$C_6$-Alkyl substituiertes Phenyl oder Phenyl-$C_n$-$H_{2n}$— mit n = 1 bis 6, oder $C_5$- oder $C_6$-Cycloalkyl sind, $R^3$ und $R^5$ zusammen und/oder $R^4$ und $R^6$ zusammen für Tetra- oder Pentamethylen oder $R^3$ und $R^4$ zusammen und/oder $R^5$ und $R^6$ zusammen Tri- oder Tetramethylen sind, umsetzt, und nach Durchführung der Synthesereaktion die Schutzgruppe in an sich bekannter Weise abspaltet.

**Claims**

1. A compound of the formula I

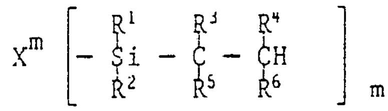

(I)

in which X is an ester group of an inorganic or organic acid and m is a number from 1 to 4, $R^1$ und $R^2$ independently of one another are linear or branched $C_1$-$C_{12}$ alkyl-substituted phenyl or benzyl, or $R^1$ and $R^2$ together are tetramethylene or pentamethylene and $R^3$ to $R^6$ independently of one another are linear or branched $C_1$-$C_{12}$ alkyl, unsubstituted or $C_1$-$C_6$-alkyl-substituted or phenyl-$C_n$-$H_{2n}$— with n = 1 to 6, $C_5$-cycloalkyl, or $C_6$-cycloalkyl, $R^3$ and $R^5$ together and/or $R^4$ and $R^6$ together are tetramethylene or pentamethylene or $R^3$ and $R^4$ together and/or $R^5$ and $R^6$ together are trimethylene or tetramethylene, one of the radicals $R^1$ to $R^6$ containing at least two carbon atoms if X is a halide or the radical of a carboxylic acid.

2. A compound according to claim 1, wherein X in formula I is —Cl, —Br or $CH_3SO_3$— or $CF_3SO_3$.

3. A compound according to claim 1, wherein $R^1$ and $R^2$ in the formula I independently of one another are $C_1$-$C_6$-alkyl.

4. A compound according to claim 3, wherein $R^1$ and $R^2$ are methyl.

5. A compound according to claim 1, wherein $R^3$ to $R^6$ in the formula I independently of one another are $C_1$-$C_6$ alkyl, cyclopentyl or cyclohexyl or $R^3$ and $R^5$ and/or $R^4$ and $R^6$ are pentamethylene or $R^3$ and $R^4$ and/or $R^5$ and $R^6$ are tetramethylene.

6. A compound according to claim 5, wherein alkyls $R^3$ to $R^6$ independently of one another are methyl, ethyl, propyl or butyl.

7. A compound according to claim 1, wherein X is Cl or $CF_3SO_3$—, $R^1$ and $R^2$ are methyl and one of the radicals $R^3$ to $R^6$ is ethyl and the others are methyl, or $R^3$ and $R^4$ are ethyl and $R^5$ and $R^6$ are methyl, or $R^3$ to $R^6$ are ethyl.

8. A compound according to claim 1, wherein X is Cl or $CF_3SO_3$—, $R^1$ and $R^2$ are methyl and $R^3$ and $R^5$ as well as $R^4$ and $R^6$ are pentamethylene.

9. A process for the preparation of a compound of the formula Ia

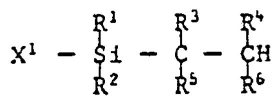

(Ia)

in which X is Cl or Br, $R^1$ and $R^2$ independently of one another are linear or branched $C_1$-$C_{12}$ alkyl, $C_5$-cycloalkyl or $C_6$-cycloalkyl or unsubstituted or $C_1$-$C_6$alkyl-substituted benzyl, or $R^1$ and $R^2$ together are tetramethylene or pentamethylene and $R^3$ to $R^6$ independently of one another are linear or branched $C_1$-$C_{12}$alkyl, unsubstituted or $C_1$-$C_6$alkyl-substituted phenyl or phenyl-$C_nH_{2n}$— with n = 1 to 6, $C_5$-cycloalkyl or $C_6$-cycloalkyl, $R^3$ and $R^5$ together and/or $R^4$ and $R^6$ together are tetramethylene or pentamethylene or $R^3$ and $R^4$ together and/or $R^5$ and $R^6$ together are trimethylene or tetramethylene, by addition of a monohalogenosilane of the formula II

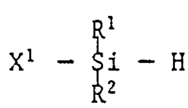

(II)

in which $R^1$, $R^2$ and X' are as defined above, to a substituted ethylene in the presence of catalytic amounts of aluminium trichloride, tribromide, oxide-chloride or oxide-bromide, alkylaluminium dichloride, alkylaluminium dibromide or mixtures thereof at temperatures of at most 60 °C, wherein the ethylene is a tetrasubstituted ethylene of the formula III

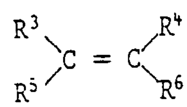

(III)

in which $R^3$ to $R^6$ are as defined above.

10. The use of a silane of the formula Ib

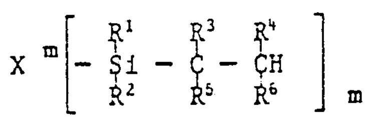

(Ib)

in which X is an ester group of an inorganic or organic acid and m is a number from 1 to 4, $R^1$ and $R^2$ independently of one another are linear or branched $C_1$-$C_{12}$alkyl, $C_5$-cycloalkyl or $C_6$-cycloalkyl or unsubstituted or $C_1$-$C_6$alkyl-substituted benzyl, or $R^1$ and $R^2$ together are tetramethylene or pentamethylene and $R^3$ to $R^6$ independently of one another are linear or branched $C_1$-$C_{12}$alkyl, unsubstituted or $C_1$-$C_6$-alkyl-substituted phenyl or phenyl-$C_nH_{2n}$— with n = 1 to 6, $C_5$-cycloalkyl or $C_6$-cycloalkyl, $R^3$ and $R^5$ together and/or $R^4$ and $R^6$ together are tetramethylene or pentamethylene or $R^3$ and $R^4$ together and/or $R^5$ and $R^6$ together are trimethylene or tetramethylene, as a removable protective-group reagent for hydroxyl, mercapto, carboxyl, amino and amide groups.

11. A process for protecting hydroxyl, mercapto, carboxyl, amino and amide groups in organic syntheses, which comprises reacting an organic compound carrying hydroxyl, mercapto, carboxyl groups or alkali metal salts thereof, amino and/or amide groups, or an aldehyde or a ketone having an α-H atom with a compound of the formula Ib

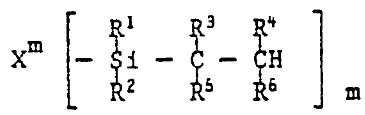

(Ib)

in which X is an ester group of an inorganic or organic acid and m is a number from 1 to 4, $R^1$ and $R^2$ independently of one another are linear or branched $C_1$-$C_{12}$alkyl, $C_5$-cycloalkyl or $C_6$-cycloalkyl or unsubstituted or $C_1$-$C_6$alkyl-substituted benzyl, or $R^1$ and $R^2$ together are tetramethylene or pentamethylene and $R^3$ to $R^6$ independently of one another are linear or branched $C_1$-$C_{12}$alkyl, unsubstituted or $C_1$-$C_6$alkyl-substituted phenyl or phenyl-$C_nH_{2n}$— with n = 1 to 6, $C_5$-cycloalkyl or $C_6$-cycloalkyl, $R^3$ and $R^5$ together and/or $R^4$ and $R^6$ together are tetramethylene or pentamethylene or $R^3$ and $R^4$ together and/or $R^5$ and $R^6$ together are trimethylene or tetramethylene, and, after the synthesis reaction has been carried out, eliminating the protective group in a manner known per se.

**Revendications**

1. Les composés de formule I ci-dessous :

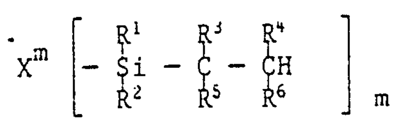

(I)

formule dans laquelle X désigne un groupe ester d'un acide minéral ou organique et m un nombre de 1 à 4, $R^1$ et $R^2$ sont chacun, indépendamment l'un de l'autre, un alkyle à chaîne linéaire ou ramifiée en $C_1$-$C_{12}$ un cycloalkyle en $C_5$ ou $C_6$, ou un benzyle ou phényle sans substituants ou avec un alkyle en $C_1$-$C_6$, ou bien $R^1$ et $R^2$ forment ensemble un groupe tétraméthylène ou pentaméthylène, et les radicaux $R^3$ à $R^6$ sont chacun, indépendamment les uns des autres, un alkyle à chaîne linéaire ou ramifiée en $C_1$-$C_{12}$, un phényle sans substituants ou portant un alkyle en $C_1$-$C_6$, ou un groupe phényl-$C_nH_{2n}$—, n étant un nombre de 1 à 6, ou encore un cycloalkyle en $C_5$ ou $C_6$ ou bien $R^3$ et $R^5$ et/ou $R^4$ et $R^6$ forment ensemble le groupe tétraméthylène ou pentaméthylène ou encore $R^3$ et $R^4$ et/ou $R^5$ et $R^6$ peuvent respectivement former ensemble le groupe triméthylène ou tétraméthylène, l'un des radicaux $R^1$ à $R^6$ ayant au moins deux atomes de carbone si X est un halogène ou le radical d'un acide carboxylique.

2. Composés de formule I selon la revendication 1 dans lesquels X est un atome de chlore ou de brome ou un groupe $CH_3SO_3$— ou $CF_3SO_3$—.

3. Composés de formule I selon la revendication 1 dans lesquels $R^1$ et $R^2$ sont chacun, indépendamment l'un de l'autre, un alkyle en $C_1$-$C_6$.

4. Composés de formule I selon la revendication 3 dans lesquels $R^1$ et $R^2$ sont chacun le groupe méthyle.

5. Composés de formule I selon la revendication 1 dans lesquels les radicaux $R^3$ à $R^6$ sont chacun, indépendamment les uns des autres, un alkyle en $C_1$-$C_6$, un cyclopentyle ou un cyclohexyle, ou bien $R^3$ et $R^5$ et/ou $R^4$ et $R^6$ forment ensemble, respectivement un groupe pentaméthylène, ou $R^3$ et $R^4$ et/ou $R^5$ et $R^6$ forment ensemble, respectivement, un groupe tétraméthylène.

6. Composés selon la revendication 5 dans lesquels les radicaux $R^3$ à $R^6$ sont en tant qu'alkyles, indépendamment les uns des autres, les groupes méthyle, éthyle, propyle ou butyle.

7. Composés selon la revendication 1 dans lesquels X est le chlore ou un groupe $CF_3SO_3$— et $R^1$ et $R^2$ sont chacun le groupe méthyle, et l'un des radicaux $R^3$ à $R^6$ est le groupe éthyle et les autres le groupe méthyle, ou bien $R^3$ et $R^4$ sont chacun le groupe éthyle et $R^5$ et $R^6$ le groupe méthyle, ou encore les radicaux $R^3$ à $R^6$ sont des groupes éthyle.

8. Composés selon la revendication 1 dans lesquels X est le chlore ou le groupe $CF_3SO_3$—, $R^1$ et $R^2$

sont des groupes méthyle, et $R^3$ et $R^5$ forment ensemble un groupe pentaméthylène, ainsi que $R^4$ et $R^6$.

9. Procédé de préparation des composés de formule Ia ci-dessous :

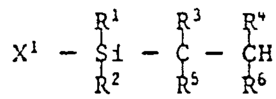

(Ia)

(dans laquelle $X^1$ désigne le chlore ou le brome, $R^1$ et $R^2$ sont chacun, indépendamment l'un de l'autre, un alkyle linéaire ou ramifié en $C_1$-$C_{12}$, un cycloalkyle en $C_5$ ou $C_6$ ou un benzyle sans substituants ou portant un alkyle en $C_1$-$C_6$, ou bien $R^1$ et $R^2$ forment ensemble le groupe tétraméthylène ou pentaméthylène, et les radicaux $R^3$ à $R^6$ sont chacun, indépendamment les uns des autres, un alkyle linéaire ou ramifié en $C_1$-$C_{12}$, un phényle sans substituants ou avec un alkyle en $C_1$-$C_6$, ou un groupe phényl-$C_nH_{2n}$—, n étant un nombre de 1 à 6, ou encore un cycloalkyle en $C_5$ ou $C_6$, ou bien $R^3$ et $R^5$ et/ou $R^4$ et $R^6$ forment respectivement ensemble un groupe tétraméthylène ou pentaméthylène, ou encore $R^3$ et $R^4$ et/ou $R^5$ et $R^6$ forment respectivement ensemble un groupe triméthylène ou tétraméthylène) par addition d'un monohalogénosilane de formule II :

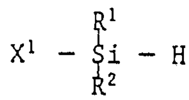

(II)

dans laquelle $R^1$, $R^2$ et $X^1$ ont les significations précédemment données, à un dérivé de substitution de l'éthylène en présence d'une proportion catalytique de trichlorure, de tribromure, d'oxychlorure ou d'oxybromure d'aluminium, ou d'un dichlorure ou d'un dibromure d'alkyl-aluminium ou d'un mélange de tels composés d'aluminium, à des températures ne dépassant pas 60 °C, procédé caractérisé en ce que le dérivé d'éthylène est un dérivé de tétrasubstitution de formule III ci-dessous :

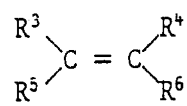

(III)

dans laquelle $R^3$ à $R^6$ ont les significations précédemment données.

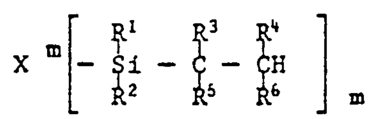

(Ib)

10. Utilisation des silanes de formule Ib ci-dessous :

(dans laquelle X désigne un groupe ester d'un acide minéral ou organique et m est un nombre de 1 à 4, $R^1$ et $R^2$ représentent chacun, indépendamment l'un de l'autre, un alkyle linéaire ou ramifié en $C_1$-$C_{12}$, un cycloalkyle en $C_5$ ou $C_6$ ou un benzyle sans substituants ou portant un alkyle en $C_1$-$C_6$, ou bien $R^1$ et $R^2$ forment ensemble le groupe tétraméthylène ou pentaméthylène, et les radicaux $R^3$ à $R^6$ sont chacun, indépendamment les uns des autres, un alkyle linéaire ou ramifié en $C_1$-$C_{12}$, un phényle sans substituants ou avec un alkyle en $C_1$-$C_6$, ou un groupe phényl-$C_nH_{2n}$—, n étant un nombre de 1 à 6, ou encore un cycloalkyle en $C_5$ ou $C_6$, ou bien $R^3$ et $R^5$ et/ou $R^4$ et $R^6$ forment ensemble le groupe tétraméthylène ou pentaméthylène, ou $R^3$ et $R^4$ et/ou $R^5$ et $R^6$ forment ensemble le groupe triméthylène ou tétraméthylène) comme réactifs pour fixer des groupes protecteurs éliminables en vue de protéger des groupes hydroxyle, mercapto, carboxyle, amino ou amide.

11. Procédé pour protéger des groupes hydroxyle, mercapto, carboxyle, amino ou amide dans des synthèses organiques, procédé caractérisé en ce que l'on fait réagir un composé organique à groupes hydroxyle, mercapto, carboxyle ou sels de métaux alcalins de ces groupes, amino et/ou amide, ou encore un aldéhyde ou une cétone ayant un atome d'hydrogène en α, avec un composé de formule Ib :

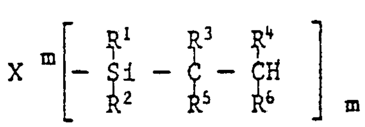

(Ib)

(dans laquelle X désigne un groupe ester d'un acide minéral ou organique et m est un nombre de 1 à 4, $R^1$ et $R^2$ représentent chacun, indépendamment l'un de l'autre, un alkyle linéaire ou ramifié en $C_1$-$C_{12}$, un cycloalkyle en $C_5$ ou $C_6$ ou un benzyle sans substituants ou portant un alkyle en $C_1$-$C_6$, ou bien $R^1$ et $R^2$

forment ensemble le groupe tétraméthylène ou pentaméthylène, et les radicaux $R^3$ à $R^6$ sont chacun, indépendamment les uns des autres, un alkyle linéaire ou ramifié en $C_1$-$C_{12}$, un phényle sans substituants ou avec un alkyle en $C_1$-$C_6$ ou un groupe phényl-$C_nH_{2n}$—, n étant un nombre de 1 à 6, ou encore un cycloalkyle en $C_5$ ou $C_6$, ou bien $R^3$ et $R^5$ et/ou $R^4$ et $R^6$ forment ensemble le groupe tétraméthylène ou pentaméthylène, ou $R^3$ et $R^4$ et/ou $R^5$ et $R^6$ forment ensemble le groupe triméthylène ou tétraméthylène), et quand la réaction de synthèse est terminée on élimine le groupe protecteur d'une manière en elle-même connue.